# EUROPÄISCHE PATENTSCHRIFT

(11) **EP 1 961 971 B1**
(45) Veröffentlichungstag und Bekanntmachung des Hinweises auf die Patenterteilung: **04.04.2012**
(21) Anmeldenummer: 08101935.8
(22) Anmeldetag: 25.02.2008
(51) Int. Cl.: F04D 29/44, B60S 1/48

(54) **Förderpumpe, insbesondere in einer Reinigungsanlage in einem Kraftfahrzeug**
Pump, in particular in a cleaning facility in a motor vehicle
Pompe d'alimentation, en particulier dans un système de nettoyage dans un véhicule automobile

(30) Priorität: 23.02.2007 DE 202007002812 U
(43) Veröffentlichungstag der Anmeldung: 27.08.2008
(73) Patentinhaber: Mann + Hummel GmbH, 71638 Ludwigsburg (DE)
(72) Erfinder: Meier, Dirk, 37581 Bad Gandersheim (DE)

(56) Entgegenhaltungen:
- DE-B1- 1 403 836
- DE-C1- 3 317 155

## Beschreibung

### Technisches Gebiet

Die Erfindung bezieht sich auf eine Förderpumpe, insbesondere in einer Reinigungsanlage in einem Kraftfahrzeug, nach dem Oberbegriff des Anspruches 1.

### Stand der Technik

In der EP 1 201 517 A2 wird eine Reinigungsanlage in einem Kraftfahrzeug beschrieben, die eine Förderpumpe zur Förderung von Waschflüssigkeit zu Streuscheiben an den Scheinwerfern des Kraftfahrzeugs umfasst. Die Förderpumpe besteht aus einem Elektromotor als Antriebseinheit, die einen Pumpenkreisel antreibt, über den Waschflüssigkeit aus einem Vorratsbehälter angesaugt und zu einem von zwei Strömungsaustrittsöffnungen gefördert wird. Die Förderpumpe ist als so genannte Dualpumpe ausgebildet, bei der abhängig von der aktuellen Drehrichtung die Waschflüssigkeit zu einer der beiden Strömungsaustrittsöffnungen gefördert wird. Bei Umkehrung der Strömungsrichtung wird entsprechend die zweite Strömungsaustrittsöffnung beaufschlagt. Die Strömungsaustrittsöffnungen befinden sich an einem Pumpengehäuse der Förderpumpe, in welchem auch der Elektromotor sowie der Pumpenkreisel aufgenommen sind. Um ein versehentliches Austreten von Waschflüssigkeit über die aktuell nicht benötigte Strömungsaustrittsöffnung zu verhindern, ist vor den Austrittsöffnungen ein Ventil angeordnet, welches drehrichtungsabhängig einen der beiden Ausgänge verschließt.

Alternativ zu einem vorgeschalteten Ventil ist es auch bekannt, den Strömungsaustrittsöffnungen in einem separaten Gehäuse eine Membran zuzuordnen, die ebenfalls einen unerwünschten Austritt von Fluid aus der aktuell nicht benötigten Strömungsaustrittsöffnung verhindert. Beide Lösungen, also sowohl das vorgeschaltete Ventil als auch die Membran im separaten Gehäuse, stellen jedoch einen verhältnismäßig hohen konstruktiven Aufwand dar. Die DE 140 3 836 B1 zeigt eine ventillose Förderpumpe nach dem Oberbegriff des Anspruchs 1.

### Offenbarung der Erfindung

Der Erfindung liegt die Aufgabe zugrunde, mit einfachen konstruktiven Maßnahmen eine als Dualpumpe ausgebildete Förderpumpe anzugeben, bei der auch ohne Einsatz eines zusätzlichen Ventiles ein unerwünschtes Austreten von Fluid über die aktuell nicht benötigte Austrittsöffnung verhindert wird.

Diese Aufgabe wird erfindungsgemäß mit den Merkmalen des Anspruches 1 gelöst. Die Unteransprüche geben zweckmäßige Weiterbildungen an.

Die erfindungsgemäße Förderpumpe, die insbesondere in einer Reinigungsanlage in einem Kraftfahrzeug eingesetzt wird, umfasst ein Pumpengehäuse, in das zwei Strömungsaustrittsöffnungen für das zu fördernde Fluid eingebracht sind, wobei jede Strömungsaustrittsöffnung zu einem zu reinigenden Gegenstand führt, beispielsweise zu einer Streuglasscheibe eines Scheinwerfers oder zu der Front- oder Heckscheibe des Fahrzeugs. Im Pumpengehäuse ist ein antreibbarer Pumpenkreisel drehbar gelagert, dessen Drehrichtung umkehrbar ist, wobei je nach aktueller Drehrichtung das Fluid durch eine der beiden Strömungsaustrittsöffnungen gefördert wird. Durch Umkehrung der Drehrichtung wird die jeweils andere Strömungsaustrittsöffnung mit Fluid beaufschlagt.

An der Innenwand des Pumpengehäuses ist in Höhe der Strömungsaustrittsöffnungen eine umlaufende Leitkante angeordnet, die vorteilhafterweise sich über den gesamten Innenumfang des insbesondere zylindrischen Pumpengehäuses erstreckt. Dasjenige Winkelsegment der Leitkante, welches zwischen den Strömungsaustrittsöffnungen liegt, ist bezogen auf die Innenwand des Pumpengehäuses radial nach innen überstehend ausgebildet. In diesem Winkelsegment bildet die Leitkante also eine radial nach innen überstehende Ringschulter. Dagegen ist die Leitkante im Bereich der Winkelsegmente, die die Strömungsaustrittsöffnungen einschließen, radial zurückgesetzt. In bevorzugter Ausführung ist die Leitkante über ihre gesamte Länge mit Ausnahme der Bereiche, in denen sich die Strömungsaustrittsöffnungen befinden, radial nach innen überstehend ausgebildet.

Durch die radiale Zurücksetzung der Leitkante im Bereich der Strömungsaustrittsöffnungen wird der Einlaufbereich der Öffnungen vergrößert. Da in den sonstigen Winkelbereichen die Leitkante radial nach innen übersteht, erhöht sich wegen des Staudruckes bei Erreichen der Strömungsaustrittsöffnungen der Druck und die Geschwindigkeit des an der Gehäuseinnenwand entlang strömenden Fluids, was mit Erreichen der nächstliegenden Strömungsaustrittsöffnung zu einem verbesserten Ablauf über diese Öffnung führt. Diejenigen Strömungsanteile des Fluids, die nicht über die nächstliegende Strömungsaustrittsöffnung abgeleitet werden, werden im weiteren Verlauf aufgrund der wieder nach innen radial überstehenden Leitkante auf eine höhere Geschwindigkeit beschleunigt und nehmen einen größeren Druck ein. Mit Erreichen der zweiten Strömungsaustrittsöffnung vergrößert sich der Durchmesser des Pumpengehäuses wieder, es entsteht eine Abrisskante, durch die sich das Fluid ablöst. Hierbei entstehen Verwirbelungen nach Art des Venturi-Prinzips, die einen Austritt des Fluids durch die zweite Strömungsaustrittsöffnung verhindern oder zumindest wesentlich reduzieren. Damit wird der Effekt erzielt, dass allein über konstruktive Maßnahme im Pumpengehäuse und ohne ein Ventil vorsehen zu müssen, je nach Drehrichtung des Pumpenkreisels das Fluid entweder durch die erste oder durch die zweite Strömungsaustrittsöffnung gefördert wird und zugleich eine unerwünschte Abströmung durch die jeweils andere Strömungsaustrittsöffnung verhindert wird. Neben den Kostenvorteilen, die durch den Entfall des zusätzlichen Ventiles erzielt werden, weist diese Ausführung den weiteren Vorteil eines geringeren Bauraumes auf.

In zweckmäßiger Ausführung ist vorgesehen, dass die Leitkante im Bereich der Strömungsaustrittsöffnungen bis zur Innenwand des Pumpengehäuses radial zurückgesetzt ist. Vorteilhafterweise erfolgt der Übergang zwischen der radial nach innen versetzten Schulter der Leitkante und dem radial erweiterten Abschnitt stetig, um eine Strömungsabrisskante beim Ausleiten des Fluids durch die jeweilige Strömungsaustrittsöffnung zu vermeiden. Dieser stetige Übergang befindet sich in Umfangsrichtung gesehen außerhalb des zwischen den beiden Strömungsaustrittsöffnungen liegenden Winkelsegments und ist den Strömungsaustrittsöffnungen in Umfangsrichtung vorgelagert. Dies hat zur Folge, dass bei einer Strömungsbeschleunigung durch den Pumpenkreisel das beschleunigte Fluid entlang der radial nach innen versetzten Leitkante strömt und mit Annäherung an die nächstliegende Strömungsaustrittsöffnung über den sich stetig radial erweiternden Abschnitt der Leitkante zur Öffnung hingeführt wird.

In dem zwischen den beiden Strömungsaustrittsöffnungen liegenden Winkelsegment erfolgt der Übergang der Leitkante zu der jeweiligen Austrittsöffnung dagegen nicht stetig, sondern als stufenförmige Abrisskante. Hierdurch wird der Effekt erzielt, dass das entlang strömende Fluid sich ablöst und Verwirbelungen auftreten, die ein Abströmen über die zweite Austrittsöffnung verhindern.

Gemäß weiterer zweckmäßiger Ausführung weist die Leitkante in Achsrichtung gesehen eine Breite auf, die mindestens dem Durchmesser der größten Strömungsaustrittsöffnungen entspricht. Hierdurch ist sichergestellt, dass über den Durchmesser jeder Strömungsaustrittsöffnung zumindest annähernd gleiche Strömungsverhältnisse herrschen.

### Kurze Beschreibung der Zeichnungen

Weitere Vorteile und zweckmäßige Ausführungen sind den weiteren Ansprüchen, der Figurenbeschreibung und den Zeichnungen zu entnehmen.
Es zeigen:

Fig. 1 in Explosionsdarstellung verschiedene Bauteile einer Förderpumpe, deren Pumpengehäuse auf der Innenwand mit einer umlaufenden Leitkante in Mindesthöhe der Größten von zwei Strömungsaustrittsöffnungen versehen ist,

Fig. 2 eine Draufsicht auf das Pumpengehäuse mit zwei in jeweils einen Stutzen mündenden Strömungsaustrittsöffnungen und mit der auf der Innenwand des Pumpengehäuses angeordneten, umlaufenden Leitkante, die im Bereich jeder Austrittsöffnung unterbrochen ist,

Fig. 3 eine perspektivische Darstellung des Pumpengehäuses,

Fig. 4 eine weitere perspektivische Darstellung des Pumpengehäuses.

In den Figuren sind gleiche Bauteile mit gleichen Bezugszeichen versehen.

### Ausführungsformen der Erfindung

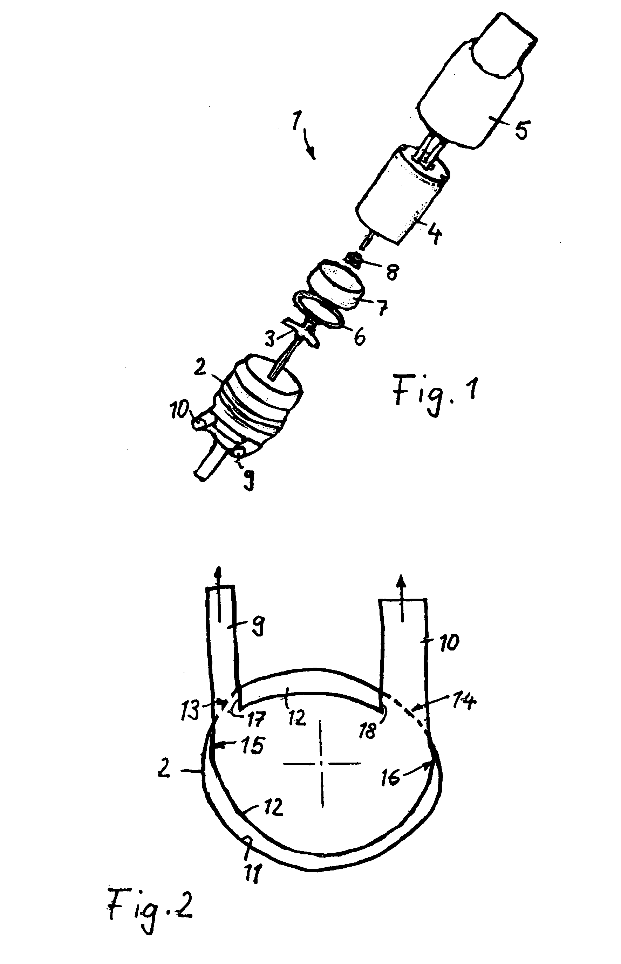

Die in Fig. 1 dargestellte Förderpumpe 1 findet insbesondere Verwendung in einer Reinigungsanlage in einem Kraftfahrzeug, vorzugsweise zur Reinigung der Scheinwerfer und/oder der Front- bzw. Heckscheibe. Die Förderpumpe 1 weist in einem Pumpengehäuse 2, das mit zwei Strömungsaustrittsstutzen 9 und 10 versehen ist, einen drehbar gelagerten Pumpenkreisel 3 an, der von einem elektrischen Antriebsmotor 4 angetrieben wird. Die Drehrichtung des Pumpenkreisels 3 bzw. des Antriebsmotors 4 ist einstellbar, wobei je nach Drehrichtung das Fluid entweder über den ersten Strömungsaustrittsstutzen 9 oder über den zweiten Strömungsaustrittsstutzen 10 gefördert wird, wohingegen der jeweils andere Strömungsaustrittsstutzen nicht mit Fluid beaufschlagt wird.

Der elektrische Antriebsmotor 4 wird von einer Kappe 5 überdeckt. Des Weiteren sind zusätzliche, für den Zusammenbau der Förderpumpe vorteilhafte Bauteile 6, 7 und 8 vorgesehen, bei denen es sich um einen O-Ring, eine Distanzscheibe und eine Dichtung handelt.

Die beiden Strömungsaustrittsstutzen 9 und 10 sind einteilig mit dem Pumpengehäuse 2 ausgebildet. Wie Fig. 2 zu entnehmen ist, können die beiden Strömungsaustrittsstutzen 9, 10 parallel oder bis zu einem Winkel von 90° zueinander liegen und münden tangential in das Pumpengehäuse 2. In der Wandung des Pumpengehäuses 2 befinden sich Strömungsaustrittsöffnungen 13 und 14, die mit den Stutzen 9 bzw. 10 verbunden sind.

An der Innenwand 11 des Pumpengehäuses 2 ist eine einteilig mit dem Pumpengehäuse ausgebildete, umlaufende Leitkante 12 in Form einer radial nach innen gerichteten Schulter vorgesehen. Diese Leitkante 12 erstreckt sich in Höhe der Strömungsaustrittsöffnungen 13 bzw. 14 und weist in Axialrichtung gesehen eine Mindestbreite auf, die dem größten Durchmesser der Strömungsaustrittsöffnungen entspricht. Die Leitkante 12 ist im Bereich der Strömungsaustrittsöffnungen 13 und 14 durchbrochen, in diesem Bereich tritt die Leitkante 12 radial bis zur Innenwand 11 des Pumpengehäuses 2 zurück. Die Leitkante 12 bewirkt eine Strömungsführung des vom Pumpenkreisel beschleunigen Fluids in Umfangsrichtung und hat zur Folge, dass je nach Drehrichtung des Pumpenkreisels das Fluid über die zuerst erreichte Strömungsaustrittsöffnung abgeleitet wird. Unterstützt wird diese Ableitung durch einen radial stetig verlaufenden Übergangsbereich 15 bzw. 16, der zwischen dem größeren Winkelsegment der Leitkante 12 und der jeweiligen Strömungsaustrittsöffnung 13 bzw. 14 gebildet ist. In diesem Übergangsbereich 15 bzw. 16 vergrößert sich der freie Innenradius in Höhe der Leitkante 12 kontinuierlich bis zum Erreichen der Innenwand 11. Der Übergangsbereich 15 bzw. 16 endet - in Umfangsrichtung gesehen - mit Erreichen der jeweiligen Strömungsaustrittsöffnung 13 bzw. 14.

In dem kleineren Winkelsegment der Leitkante 12, das direkt zwischen den beiden Strömungsaustrittsstutzen 9 und 10 liegt, ist der Übergang zur jeweils benachbarten Strömungsaustrittsöffnung 13 bzw. 14 stufenförmig ausgebildet, an den betreffenden Stellen besitzt die Leitkante 12 jeweils eine Abrisskante 17 bzw. 18. Diese Abrisskante 17 bzw. 18 unterstützt ein Ablösen der Fluidströmung, sobald die entsprechende Abrisskante von dem Fluid überströmt wird. Dadurch wird ein tangentiales Abströmen des Fluids über die zugeordnete, zweite Austrittsöffnung verhindert.

Dreht sich der Pumpenkreisel beispielsweise im Uhrzeigersinn, so wird mit Erreichen der ersten Strömungsaustrittsöffnung 13 aufgrund des sich radial stetig erweiternden Übergangsbereiches 15 das Fluid beschleunigt und unter höheren Druck gesetzt, was gemeinsam mit der Geometrie der Leitkante im Übergangsbereich 15 und der ein Hindernis darstellenden, die Strömungsaustrittsöffnung 13 begrenzenden Abrisskante 17 eine Abströmung über die erste Strömungsaustrittsöffnung 13 unterstützt. Im weiteren Verlauf wird nicht ausgeströmtes Fluid über den kürzeren Winkelabschnitt der Leitkante 12 weitergeleitet bis zum Erreichen der zweiten Strömungsaustrittsöffnung 14. Die an dieser Stelle befindliche zweite Abrisskante 18 an der Leitkante 12 bewirkt eine Ablösung des Fluids und damit einhergehend eine Verwirbelung, was eine Abströmung über die zweite Strömungsaustrittsöffnung 14 zumindest weitgehend verhindert.

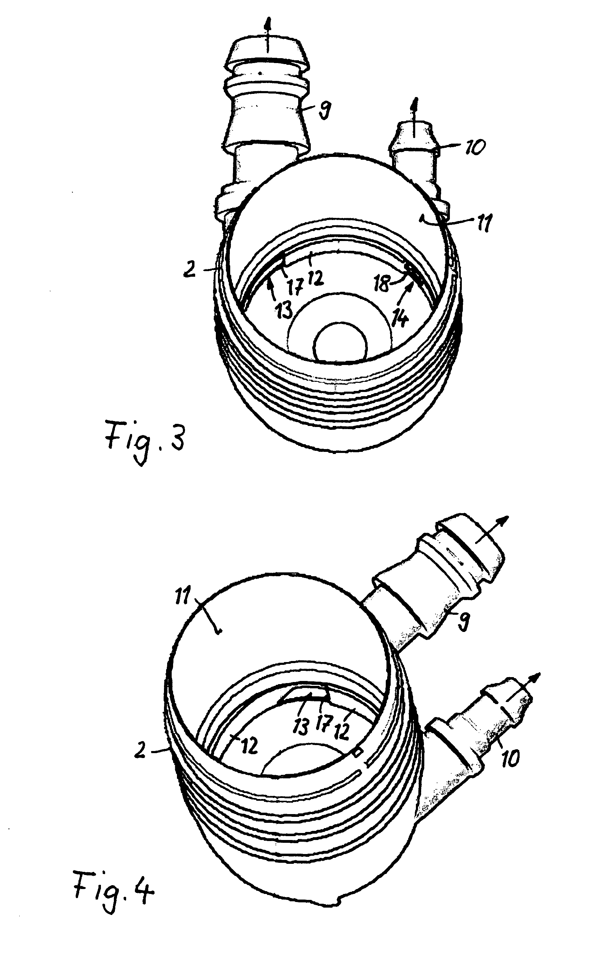

Wie den Figuren 3 und 4 zu entnehmen, können die Strömungsaustrittsstutzen 9 und 10 sowie die zugeordneten Strömungsaustrittsöffnungen 13 bzw. 14 einen unterschiedlich großen Durchmesser 14 aufweisen. Hierdurch kann einem unterschiedlichen Einsatzzweck des abströmenden Fluids Rechnung getragen werden, beispielsweise der Reinigung der Streuglasscheibe eines Scheinwerfers und der Reinigung der Front- bzw. Heckscheibe des Fahrzeuges.

## Patentansprüche

1. Ventillose Förderpumpe, insbesondere in einer Reinigungsanlage in einem Kraftfahrzeug, mit einem Pumpengehäuse (2), in das zwei Strömungsaustrittsöffnungen (13, 14) für das zu fördernde Fluid eingebracht sind, und einem angetriebenen Pumpenkreisel (3), dessen Drehrichtung umkehrbar ist, wobei je nach aktueller Drehrichtung des Pumpenkreisels (3) Fluid durch eine der beiden Strömungsaustrittsöffnungen (13, 14) gefördert wird, **dadurch gekennzeichnet, dass** an der Innenwand (11) des Pumpengehäuses (2) in Höhe der Strömungsaustrittsöffnungen (13, 14) eine umlaufende Leitkante (12) vorgesehen ist, wobei das Winkelsegment der leitkante zwischen den Strömungsaustrittsöffnungen (13, 14) bezogen auf die Innenwand (11) des Pumpengehäuses (2) radial nach innen übersteht und in den beiden Winkelsegmenten, die jeweils eine Strömungsaustrittsöffnung (13, 14) einschließen, radial zurückgesetzt ist.

2. Ventillose Förderpumpe nach Anspruch 1, **dadurch gekennzeichnet, dass** die Leitkante (12) im Bereich der Strömungsaustrittsöffnungen (13, 14) bis zur Innenwand (11) des Pumpengehäuses (2) radial zurückgesetzt ist.

3. Ventillose Förderpumpe nach Anspruch 1 oder 2, **dadurch gekennzeichnet, dass** die beiden Strömungsaustrittsöffnungen (13, 14) mit Austrittsstutzen (9, 10) verbunden sind, die jeweils tangential in das Pumpengehäuse (2) münden.

4. Ventillose Förderpumpe nach Anspruch 3, **dadurch gekennzeichnet, dass** die beiden Austrittsstutzen (9, 10) parallel oder bis zu einem Winkel von 90° angeordnet sind.

5. Ventillose Förderpumpe nach einem der Ansprüche 1 bis 4, **dadurch gekennzeichnet, dass** der Übergang zwischen den radial nach innen versetzten Leitkantenabschnitten und den radial zurückgesetzten Leitkantenabschnitten stetig verläuft.

6. Ventillose Förderpumpe nach Anspruch 5, **dadurch gekennzeichnet, dass** der stetige radiale Übergang sich außerhalb des zwischen den beiden Strömungsaustrittsöffnungen (13, 14) liegenden Winkelsegments befindet.

7. Ventillose Förderpumpe nach einem der Ansprüche 1 bis 6, **dadurch gekennzeichnet, dass** der radiale Übergang zwischen den Strömungsaustrittsöffnungen (13, 14) und dem zwischenliegenden Winkelsegment stufenförmig erfolgt.

8. Ventillose Förderpumpe nach einem der Ansprüche 1 bis 7, **dadurch gekennzeichnet, dass** die Leitkante (11) eine axiale Breite aufweist, die dem Durchmesser der Strömungsaustrittsöffnungen (13, 14) entspricht.

## Claims

1. Valveless feed pump, in particular in a cleaning system in a vehicle, with a pump housing (2) into which two flow outlet openings (13, 14) for the fluid to be conveyed are realized, and a driven pump rotor (3) the direction of rotation of which is reversible, fluid being conveyed through one of the two flow outlet openings (13, 14) depending on the current direction of rotation of the pump rotor (3), **characterized in that** a circumferential guiding edge (12) is provided at the internal wall (11) of the pump housing (2) at the level of the flow outlet openings (13, 14), the angular segment of the guiding edge between the flow outlet openings (13, 14) projecting radially inwards in relation to the internal wall (11) of the pump housing (2) and being radially recessed in both angular segments which enclose each one flow outlet opening (13, 14).

2. Valveless feed pump according to claim 1, **characterized in that** the guiding edge (12) is radially recessed in the area of the flow outlet openings (13, 14) up to the internal wall (11) of the pump housing (2).

3. Valveless feed pump according to claim 1 or 2, **characterized in that** both flow outlet openings (13, 14) are connected with outlet connections (9, 10) that lead each tangentially into the pump housing (2).

4. Valveless feed pump according to claim 3, **characterized in that** both outlet connections (9, 10) are disposed in parallel or up to an angle of 90°.

5. Valveless feed pump according to one of the claims 1 to 4, **characterized in that** the transition between the guiding edge sections which are offset radially inwards and the radially recessed guiding edge sections is continuous.

6. Valveless feed pump according to claim 5, **characterized in that** the continuously radial transition is located outside of the angular segment disposed between both flow outlet openings (13, 14).

7. Valveless feed pump according to one of the claims 1 to 6, **characterized in that** the radial transition between the flow outlet openings (13, 14) and the intermediate angular segment is realized in a staggered manner.

8. Valveless feed pump according to one of the claims 1 to 7, **characterized in that** the guiding edge (11) features an axial width that corresponds to the diameter of the flow outlet openings (13, 14).

## Revendications

1. Pompe d'alimentation sans soupape, notamment dans une installation de nettoyage dans un véhicule automobile, avec un corps de pompe (2) dans lequel sont réalisées deux ouvertures d'écoulement du flux (13, 14) pour le liquide à transporter, et avec un rotor de pompe (3) entraîné dont le sens de rotation peut être inversé, un liquide étant acheminé, selon le sens de rotation actuel du rotor de pompe (3), par l'une des deux ouvertures d'écoulement du flux (13, 14), **caractérisée en ce qu'**un bord de guidage circulaire (12) est prévu sur la paroi intérieure (11) du corps de la pompe (2) à hauteur des ouvertures d'écoulement du flux (13, 14), le segment angulaire du bord de guidage dépassant vers l'intérieur, en sens radial, par rapport à la paroi intérieure (11) du corps de la pompe (2), entre les ouvertures d'écoulement du flux (13, 14) et se situe en retrait en sens radial dans les deux segments angulaires qui encerclent chacun une ouverture d'écoulement du flux (13, 14).

2. Pompe d'alimentation sans soupape selon la revendication 1, **caractérisée en ce que** le bord de guidage (12) se situe en retrait en sens radial, dans la zone des ouvertures d'écoulement du flux (13, 14), jusqu'à la paroi intérieure (11) du corps de la pompe (2).

3. Pompe d'alimentation sans soupape selon la revendication 1 ou 2, **caractérisée en ce que** les deux ouvertures d'écoulement du flux (13, 14) sont reliées avec des tubulures d'écoulement (9, 10) qui débouchent respectivement de manière tangentielle dans le corps de la pompe (2).

4. Pompe d'alimentation sans soupape selon la revendication 3, **caractérisée en ce que** les deux tubulures d'écoulement (9, 10) sont disposées de manière parallèle ou selon un angle maximal de 90°.

5. Pompe d'alimentation sans soupape selon l'une des revendications 1 à 4, **caractérisée en ce que** la transition entre les sections du bord de guidage décalées en sens radial vers l'intérieur et les sections du bord de guidage en retrait en sens radial est continu.

6. Pompe d'alimentation sans soupape selon la revendication 5, **caractérisée en ce que** la transition radiale continue se situe hors du segment angulaire situé entre les deux ouvertures d'écoulement du flux (13, 14).

7. Pompe d'alimentation sans soupape selon l'une des revendications 1 à 6, **caractérisée en ce que** la transition radiale entre les ouvertures d'écoulement du flux (13, 14) et le segment angulaire intermédiaire est échelonnée.

8. Pompe d'alimentation sans soupape selon l'une des revendications 1 à 7, **caractérisée en ce que** le bord de guidage (11) a une largeur axiale qui correspond au diamètre des ouvertures d'écoulement du flux (13, 14).
